# EUROPÄISCHE PATENTSCHRIFT

(11) **EP 2 003 441 B1**
(45) Veröffentlichungstag und Bekanntmachung des Hinweises auf die Patenterteilung: **05.01.2011**
(21) Anmeldenummer: 07110146.3
(22) Anmeldetag: 13.06.2007
(51) Int. Cl.: G01N 21/55

(54) **ATR-Sensor**
ATR sensor
Capteur ATR

(43) Veröffentlichungstag der Anmeldung: 17.12.2008
(73) Patentinhaber: Mettler-Toledo AG, 8606 Greifensee (CH)
(72) Erfinder: Anders, Klaus-Dieter, 5452, Oberrohrdorf (CH); Haller, Martin, 8964, Friedlisberg (CH)

(56) Entgegenhaltungen:
- EP-A- 1 630 543
- CH-A5- 674 082
- US-A1- 2004 201 835
- US-A1- 2006 197 954
- US-A1- 2007 004 030
- US-A1- 2007 082 408
- REITER G ET AL: "In situ FTIR ATR spectroscopic study of the interaction of immobilized human tumor necrosis factor-alpha with a monoclonal antibody in aqueous environment" BIOCHIMICA ET BIOPHYSICA ACTA (BBA) - PROTEINS & PROTEOMICS, ELSEVIER, Bd. 1699, Nr. 1-2, 1. Juni 2004 (2004-06-01), Seiten 253-261, XP004509932 ISSN: 1570-9639
- NENNINGER G G ET AL: "Reference-compensated biosensing using a dual-channel surface plasmon resonance sensor system based on a planar lightpipe configuration" SENSORS AND ACTUATORS B, ELSEVIER SEQUOIA S.A., LAUSANNE, CH, Bd. 51, Nr. 1-3, 31. August 1998 (1998-08-31), Seiten 38-45, XP004153987 ISSN: 0925-4005

## Beschreibung

Die Erfindung betrifft einen ATR-Sensor gemäß dem Anspruch 6 zur Gehaltsbestimmung einer in einem Messmedium gelösten Substanz mittels der abgeschwächten Totalreflektion (eng. attenuated total reflection; ATR) sowie ein Verfahren zur Überprüfung der Kalibrierung und/oder zur In-Line-Kalibrierung des ATR-Sensors.

Die abgeschwächte Totalreflektion (eng. attenuated total reflectance, ATR) ist eine spektroskopische Technik, bei der eine Probe mittels innerer Reflektion untersucht wird. Elektromagnetische Strahlung, zum Beispiel Strahlung aus dem Mittleren Infraroten Bereich, wird durch eine erste angeschnittene Fläche in einen ATR-Körper eingekoppelt, um dann an einer ersten Oberfläche reflektiert zu werden. Die Strahlung wird entlang des ATR-Körpers mehrfach zwischen dieser ersten und einer zweiten Oberfläche reflektiert, wobei es sich bei jeder Reflektion um eine abgeschwächte Totalreflektion handelt. Ein Vorteil der ATR-Spektroskopie ist, dass bereits eine sehr kurze optische Weglänge zur Ermittlung eines Spektrums ausreicht. Die Eindringtiefe der Strahlung in die Probe hängt von den Brechungsindices der Probe und des ATR-Körpers, sowie vom Einfallswinkel mit dem die Strahlung auf die Probe auftrifft ab.

Wenn eine Probe oder ein Messmedium mit einer dieser Oberflächen in Kontakt gebracht wird, so absorbiert diese bei jeder Reflektion selektiv einen Teil der Strahlung. Die verbleibende Strahlung wird am anderen Ende wieder aus dem ATR-Körper ausgekoppelt und die Energieverteilung der durch die Probe bzw. das Messmedium absorbierten Strahlung mit einem Detektor erfasst. Die Energieverteilung kann in Abhängigkeit der Wellenlänge als Spektrums ausgegeben werden oder es wird nur die Absorption bei mindestens einer Wellenlänge erfasst. Es sind unterschiedlich geformte Körper für die innere Reflektion bekannt. Dabei handelt es sich häufig um Kristalle, welche für die zur Messung verwendete Strahlung optisch transparent sind.

Die ATR-Spektroskopie wird vor allem im Laborbereich für die Untersuchung verschiedenartiger Proben eingesetzt. Ein herkömmliches ATR-Spektrometer weist neben dem ATR-Körper eine Strahlenquelle, einen Detektor sowie geeignete optische Mittel zur Ein- und Auskopplung der Strahlung in bzw. aus dem ATR-Körper auf. Die zu untersuchenden Proben können fest, flüssig oder auch gasförmig sein.

Neben Laboranwendungen sind auch Anwendungen in chemischen, biologischen oder physikalischen Prozessen bekannt, bei denen beispielsweise mittels einer ATR-Sonde ein mit einer Messoberfläche des ATR-Körpers in Kontakt gebrachtes Messmedium untersucht wird. Gerade bei Prozessanwendungen wird häufig nicht das vollständige Spektrum analysiert, sondern es werden nur ausgewählte Wellenlängen eingestrahlt und/oder detektiert, um so gezielt die Absorption bestimmter im Messmedium vorliegender Substanzen und darüber deren Konzentration im Prozess- oder Messmedium zu bestimmen.

Die Bestimmung einer oder mehrerer gelöster Substanzen in einem Medium, vor allem die Bestimmung deren Gehalts oder deren Konzentration, wird in den verschiedensten Gebieten, wie z. B. der Getränkeindustrie oder der Biotechnologie, durchgeführt. Beispiele für solche Substanzen sind Kohlendioxid (CO₂), Methanol, Ethanol, Methan sowie andere chemische Substanzen, die in einem fluiden Prozess- oder Messmedium, beispielsweise in einer wässrigen Lösung oder dergleichen, enthalten sind. Vor allem die genaue Kenntnis des CO₂-Gehalts ist für die Getränkeindustrie im Rahmen der Produktionskontrolle von Interesse.

ATR-Sensoren mit unterschiedlichen ATR-Körpern für In-Line Messungen sind beispielsweise aus der US 2004/0201835 A1 bekannt. Insbesondere werden ATR-Körper mit unterschiedlichen geometrischen Formen oder mit einer Aussparung auf der dem Messmedium zugewandten Seite offenbart, so dass das Messmedium mit einer Kombination aus ATR- und Transmissionsspektroskopie untersucht werden kann.

Ein bekanntes Problem bei spektroskopischen Untersuchungen unter Prozessbedingungen stellt die Kalibrierung des Sensors und insbesondere die Überprüfung der Kalibrierung, die Neukalibrierung und/oder die Nachkalibrierung eines in einer Prozessanlage eingebauten Sensors dar.

Der Zusammenhang zwischen der Absorption und der Konzentration einer Substanz ist über das Lambert-Beer'sche Gesetz gegeben, welches für kleine Konzentrationen einen linearen Zusammenhang zwischen den beiden Grössen herstellt.

Soll eine einzelne Substanz oder Substanzklasse in einem komplexen Messmedium bestimmt werden, so stellt sich jedoch das Problem, dass in der Regel nicht nur die im Messmedium gelöste Substanz, sondern auch das Messmedium selbst die eingestrahlte Strahlung absorbiert. Derartige Effekte werden unter anderem als Matrixeffekte bezeichnet.

Die Kalibrierung eines prozesstauglichen ATR-Sensors umfasst daher zur Minimierung von Matrixeffekten, nicht nur die Messung mit verschiedenen Reinsubstanzen sondern insbesondere die konzentrationsabhängige Messung dieser Substanzen in einem gegebenenfalls veränderlichen Messmedium. Gerade bei Messmedien mit wechselnder Zusammensetzung, wie sie beispielsweise während eines Bierbrauprozesses auftreten, müssten für eine umfassende Kalibrierung sämtliche Kombinationen von Messmedium und Substanzgehalt vermessen werden und bei der Kalibrierung berücksichtigt werden, was vor allem sehr zeitintensiv ist.

Eine solche Kalibrierung wird daher in der Regel ausserhalb des Prozesses mit standardisierten Proben durchgeführt und gibt die Verhältnisse im Prozess nur mit einer gewissen Fehlertoleranz wieder.

Zur Gewährleistung der Messtoleranzen und/oder der Funktionsfähigkeit von ATR-Sensoren, insbesondere solchen welche in eine Prozessanlage eingebaut sind, und für die Untersuchung gleichartiger oder veränderlicher Messmedien eingesetzt werden, wäre es vorteilhaft die Kalibrierung des Sensors im eingebauten Zustand bzw. In-Line ermitteln und/oder überprüfen zu können.

Das Dokument "Reference-compensated biosensing using a dual-channel surface plasmon resonance sensor system based on a planar lightpipe configuration"; SENSORS AND ACTUATORS B; 1998-08-31; Nenninger G G; VOL 51; NR 1-3; S. 38 - 45" offenbart ein planares SPR Sensorsystem mit zwei Meßkanälen, z.B. für die Bioanalytik, umfassend eine Referenzkompensierung. Der zweite Meßkanal dient als Referenz während z.B. eines Antigen-Antikörper Bindeassays, wobei die Funktionalisierung der Meßoberflächen in den verschiedenen Kanälen unterschiedlich ist. Somit erzielt das System eine Kompensierung von Störeinflüssen, die z.B. durch Analytekonzentration- bzw. Temperaturschwankungen entstanden sind. Gemäß der obigen Offenbarung wird das Eingangslicht huber zwei getrennten Bahnen mittels Glasfasern in den entsprechenden Bereichen eines ATR-Körpers eingekoppelt. Die eingekoppelten Lichtstrahlen sind auf der Meßoberfläche des ATR-Körpers durch einen Abstand von z.B. 9 mm voneinander getrennt und tasten jeweils einen Bereich von zwei separaten Strömungskanälen ab, die durch zwei Durchflusszellen gebildet sind. Somit wird eine Kalibrierung d.h. eine Referenzkompensation mittels eines Meßkanals und eines zusätzlichen Referenzkanals offenbart.

Gelöst wird diese Aufgabe durch einen ATR-Sensor gemäß dem Anspruch 6 zur Bestimmung von einer in einem Messmedium gelösten Substanz und ein Verfahren gemäß dem Anspruch 1 zur Kalibrierung des Sensors.

Der ATR-Sensor weist ein Gehäuse, einen ATR-Körper, eine Lichtquelle und einen Detektor auf. Der ATR-Körper wiederum weist mindestens eine Messoberfläche und eine dazu parallel angeordnete Kalibrieroberfläche auf, wobei die Messoberfläche mit dem Messmedium in Kontakt bringbar ist und die Kalibrieroberfläche eine Kalibrierkammer auf mindestens einer Seite begrenzt. Die Kalibrierkammer weist mindestens einen Anschluss zum Einleiten und/oder Ableiten eines fluiden Kalibrierstandards auf.

Ein derartiger Sensor ermöglicht das Einbringen oder Entfernen sowie die Vermessung eines Kalibrierstandards in die Kalibrierkammer während der Sensor in der Prozessanlage eingebaut ist und mit dem Messmedium in Kontakt steht, wodurch eine Überprüfung einer beispielsweise werksseitig vorgenommenen Grundkalibrierung oder sogar eine In-Line Kalibrierung, also eine Kalibrierung eines in eine Prozessanlage eingebauten Sensors, ermöglicht werden kann.

Der ATR-Körper ist vorzugsweise derart ausgestaltet, dass dieser an seiner mediumsabgewandeten Seite mindestens eine Aussparung aufweist, welche an einer Seite durch die Kalibrieroberfläche begrenzt wird. Durch Verschliessen dieser Aussparung mit geeigneten Mitteln kann die Kalibrierkammer ausgebildet werden.

Diese Anordnung ist vorteilhaft, da so ein direkter Kontakt zwischen einem in der Kalibrierkammer angeordneten Kalibrierstandard und der Kalibrieroberfläche ermöglicht wird.

Der ATR-Sensor zeichnet sich dadurch aus, dass er einstückig oder aus mittels optisch transparentem Material fest verbunden Teilkörpern ausgebildet ist. ATR-Körper können aus verschiedenen Materialien bestehen, zu denen unter anderen Diamant, Saphir, Cadmiumtellurid, Thalliumbromidiodid, Silizium, Germanium, Zinkselenid, Zinksulphid, Magnesiumfluorid, Cäsiumchlorid, Silberchlorid, Calciumfluorid, Kalirumbromid, beschichtetes Natriumchlorid sowie auch Polymere, wie Polyethylen, und verwandte optisch transparente Stoffe gehören.

Vorzugsweise besteht der ATR-Körper aus einem Hohlzylinder, welcher die Aussparung umfasst, und aus einem den Hohlzylinder abdeckenden Kegelstumpf, dessen Basis denselben Durchmesser hat wie der Holzylinder. Weitere Ausgestaltungen umfassen beispielsweise einen im Wesentlichen U-förmigen ATR-Körper mit geraden Kanten, wobei in dieser Ausführungsform die Aussparung im ATR-Körper zur Ausbildung der Kalibrierkammer an drei Seiten durch geeignete Wände verschlossen werden muss.

Ein weiterer Aspekt der Erfindung umfasst ein Verfahren gemäß dem Anspruch 8 zur Überprüfung der Kalibrierung und/oder zur In-Line-Kalibrierung eines ATR-Sensors für eine in einem Messmedium gelöste Substanz, insbesondere eines Sensor der vorangehend beschriebenen Art, welcher einen ATR-Körper, mindestens eine Lichtquelle und mindestens einen Detektor aufweist. Während der Überprüfung und/oder der In-Line-Kalibrierung kann der Sensor im Prozess verbleiben.

Zur Kalibrierung wird eine Messoberfläche des ATR-Körpers mit dem Messmedium in Kontakt gebracht und ein erster Absorptionswert bei mindestens einer Wellenlänge erfasst. Der Absorptionswert wird nach abgeschwächter Totalreflektion einer von der Lichtquelle in den ATR-Körper eingestrahlten Strahlung mittels des Detektors erfasst.

Unter dem Absorptionswert wird hier die Absorption bei einer bestimmten Wellenlänge oder ein aus dem Absorptionsspektrum in einem bestimmten Wellenlängenbereich ermittelter Wert verstanden, welcher ein Mass für die Absorption der Substanz bei dieser Wellenlänge oder in diesem Wellenlängenbereich zu verstehen ist.

Anschliessend kann eine zur Messoberfläche parallel angeordnete Kalibrieroberfläche des ATR-Körpers mit einem ersten fluiden Kalibrierstandard in Kontakt gebracht werden, wobei der erste Kalibrierstandard in der Kalibrierkammer in einer ersten Konzentration vorliegt. In der Regel entspricht die chemische Zusammensetzung des Kalibrierstandards im Wesentlichen der im Messmedium gelösten Substanz, welche untersucht werden soll, oder ist eine Reinsubstanz mit einer charakteristischen Absorptionsbande oder einem charakteristischen Absorptionsspektrum.

Jetzt kann ein zweiter Absorptionswerts bei derselben Wellenlänge oder Wellenlängen erfasst werden, welcher eine Überlagerung der Absorption des Messmediums und des Kalibrierstandards darstellt. Die von der Lichtquelle ausgesandte Strahlung wird abwechselnd an der Messoberfläche und der zur Messoberfläche parallelen Kalibrieroberfläche reflektiert und wechselwirkt sowohl mit dem Messmedium als auch mit dem Kalibrierstandard.

Anhand des ersten und zweiten Absorptionswertes kann bei Kenntnis der Konzentration oder des Gehalts des ersten Kalibrierstandards und unter der Annahme, dass das Lambert-Beersche-Gesetz erfüllt ist, eine Kalibrier-Prüffunktion ermittelt werden. Das Lambert-Beersche-Gesetz zeigt einen linearen Zusammenhang zwischen der Konzentration und der Absorption einer Substanz oder Probe auf, so dass mit zwei Messpunkten eine Zwei-Punkt-Kalibrierung durchgeführt werden kann. Der erste Messpunkt entspricht dabei dem ersten Absorptionswert, welcher bei einer gleich Null gesetzten Substanz-Konzentration erfasst wurde und der zweite Messpunkt entspricht dem zweiten Absorptionswert und der Konzentration des Kalibrierstandards.

Die so ermittelte Kalibrier-Prüffunktion kann mit einer Grundkalibrierung, wie sie beispielsweise werksseitig oder ausserhalb des Prozesses ermittelt wurde, verglichen werden. Stimmen die Prüffunktion und die Grundkalibrierung im Wesentlichen überein, so kann die Grundkalibrierung weiterhin zur Ermittlung der Messwerte verwendet werden. Weicht die Prüffunktion von der Grundkalibrierung ab, so ist dies ein Zeichen dafür, dass der Sensor neu kalibriert werden sollte.

Zur Ermittlung einer neuen oder aktuellen Kalibrierfunktion kann mindestens ein zweiter Kalibrierstandard mit einer zweiten Konzentration mit der Kalibrieroberfläche in Kontakt gebracht werden und ein dritter Absorptionswert ermittelt werden. Dieser dritte Absorptionswert umfasst sowohl die Absorption des zweiten Kalibrierstandards als auch die des Messmediums.

Die aktuelle Kalibrierfunktion kann unter denselben Annahmen ermittelt werden, wie die Kalibrier-Prüffunktion, allerdings unter Berücksichtigung des ersten, zweiten und dritten Absorptionswerts und der ersten und zweiten Konzentration des Kalibrierstandards. Die aktuelle Kalibrierfunktion kann also durch eine Drei-Punkt-Kalibrierung ermittelt werden. Anstelle der Auswertung einzelner Absorptionswerte mit insbesondere linearen Regressionsmethoden könnte auch das gesamte Absorptionsspektrum ausgewertet werden, hierzu eignen sich vor allem die bekannten chemometrischen Verfahren wie die multiple lineare Regression oder die Partial-leastsquare-Analyse.

Die Überprüfung der Kalibrierung und/oder die In-Line-Kalibrierung kann selbstverständlich auch in regelmässigen und/oder in vom Benutzer vorgegebenen Zeitabständen wiederholt werden, um die Qualität der Messergebnisse zu kontrollieren.

Vorzugsweise sollte sich die Zusammensetzung des Messmediums während der Kalibrierungs-Überprüfung oder der In-Line-Kalibrierung nicht ändern, da sonst Absorptionswerte miteinander korreliert werden, welche unterschiedliche Matrixeffekte aufweisen.

Der Kalibrierstandard ist in der Regel ein fluides Medium und vorzugsweise ein gasförmiges Medium. Der Kalibrierstandard kann durch geeignete Leitungen oder Zugänge auf in eine an einer Seite von der Kalibrieroberfläche begrenzte Kalibrierkammer eingebracht oder wieder entfernt werden.

Die Konzentration oder der Gehalt des Kalibrierstandards in der Kalibrierkammer kann im Falle eines gasförmigen Kalibrierstandards über dessen Partialdruck angepasst werden.

Zusätzlich zur Erfassung eines Absorptionswerts bei einer ersten Wellenlänge können gleichzeitig ein Absorptionswert bei einer Messwellenlänge und ein weiterer Absorptionswert bei einer davon abweichenden Kalibrierwellenlänge erfasst werden. Das Lambert-Beersche-Gesetz ist über den Absorptionskoeffizienten von der Wellenlänge abhängig, so dass durch die gleichzeitige Bestimmung der Absorptionswerte bei unterschiedlichen Wellenlängen zwei Kalibrier-Prüffunktionen und/oder mindestens zwei aktuelle Kalibrierfunktionen in Abhängigkeit der jeweiligen Wellenlängen ermittelt, Matrixeffekte besser kontrolliert und/oder sogar parallel eine Messung und eine Überprüfung der Kalibrierung durchgeführt werden können.

Für eine gleichzeitige Erfassung der Absorptionswerte bei mehr als einer Wellenlänge sollte die Lichtquelle entweder aus mehreren Lichtquellen bestehen, welche jeweils Strahlung einer bestimmten Wellenlänge aussenden, oder Strahlung eines gewissen Wellenlängenbereichs abstrahlen, wie sogenannte Breitbandlichtquellen. Der Detektor sollte ebenfalls gleichzeitig mehrere Wellenlängen oder einen Wellenlängenbereich detektieren können. ATR-spektroskopische Untersuchungen können in verschiedenen Wellenlängenbereichen durchgeführt werden wobei der Bereich des mittleren Infrarot besondere geeignet ist, da hier viele Moleküle charakteristische Absorptionsbanden zeigen.

Werden ATR-Sensoren für die Gehaltsbestimmung von in einem flüssigen Messmedium gelöstem Kohlendioxid verwendet, so kann beispielsweise eine Messwellenlänge von ca. 4.24 µm und ein Kalibrierwellenlänge von ca. 3.95 µm eingesetzt werden, da Kohlendioxid bei diesen beiden Wellenlängen Absorptionsbanden aufweist. Je nach Messmedium, in dem eine Substanz gelöst ist, kann sich der Mittelpunkt einer Absorptionsbande verschieben, so dass die Wellenlängen Angaben eher als Richtwerte zu verstehen sind. Diese Effekte sind der optischen Spektroskopie seit langem bekannt.

Neben CO₂-Schwingungen können auch CH-Schwingungen bei ca. 3.4 µm und CO-Schwingungen bei ca. 9.5 µm detektiert werden und so der Gehalt von Substanzen im Messmedium ermittelt werden, welche Moleküle oder Molekülfragmente mit CH- und/oder CO-Bindungen aufweisen.

Es bietet sich an, das hier vorgestellte Verfahren als Computerprogramm in einer Auswerteeinheit eines erfindungsgemässen ATR-Sensors anzuordnen, wobei das Computerprogramm insbesondere zur Ermittlung eines Messergebnisses, insbesondere des Gehalts oder der Konzentration einer gelösten Substanz, mittels einer Grundkalibrierung oder aktuellen Kalibrierung und/oder zur Überprüfung einer Kalibrierung dient.

Ein erfindungsgemässer ATR-Sensor wird in den folgenden Figuren näher beschrieben, wobei gleiche Merkmale mit den gleichen Bezugszeichen versehen sind:
- Fig. 1: Mit einem Messmedium in Kontakt stehender ATR-Sensor im Schnitt;

- Fig. 2: schematische Teildarstellung von Figur 1.

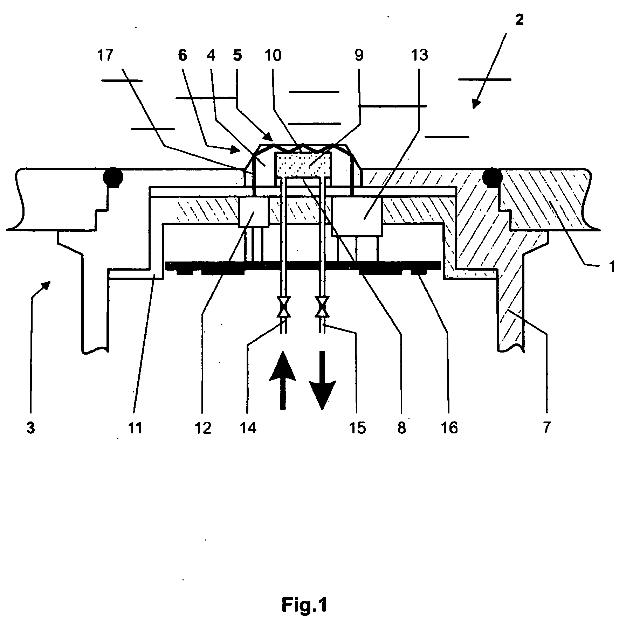

Figur 1 zeigt einen ATR-Sensor 3, welcher in eine Prozessanlage oder einen Behälter eingebaut ist, welche hier durch eine Wand 1 angedeutet ist. In der Anlage befindet sich ein fluides Messmedium 2, in dem die zu untersuchende Substanz gelöst ist. Fluide Messmedien können flüssig und/oder gasförmig sein. Zu den gelösten Substanzen, welche mit einem ATR-Sensor untersucht werden können zählen beispielsweise Substanzen wie Kohlendioxid, Kohlenmonoxid oder Kohlenwasserstoffhaltige Verbindungen, wobei selbstverständlich auch andere Substanzen vermessen werden können, solange diese charakteristische Absorptionslinien aufzeigen und der Sensor entsprechend angepasste Komponenten umfasst.

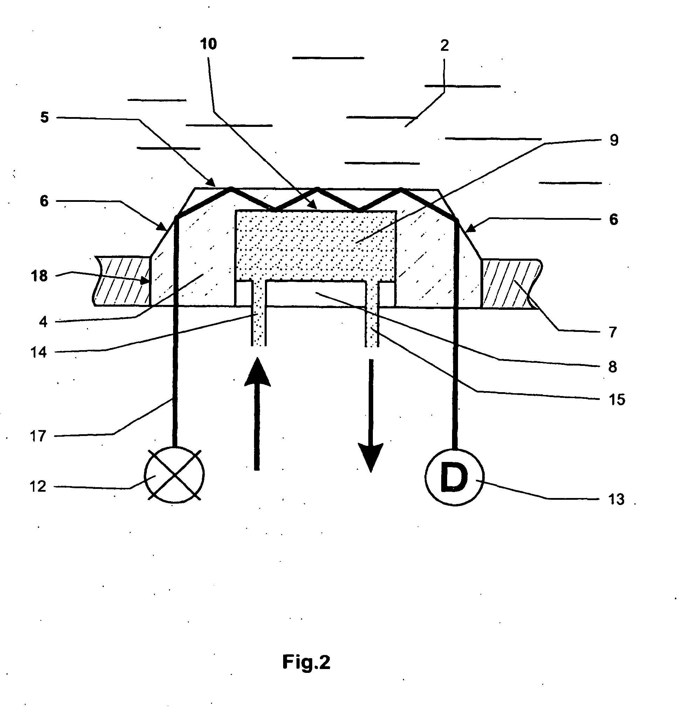

Das Kernstück des Sensors 3 ist ein ATR-Körper 4 mit einer Messoberfläche 5, welche mit dem Messmedium 2 in direktem Kontakt steht. Der hier gezeigte ATR-Körper 4 weist im Wesentlichen einen Hohlzylinder auf, welcher von einem Kegelstumpf abgedeckt wird, wobei der Aussendurchmesser des Hohlzylinders und der Durchmesser der Basis des Kegelstumpfes im Wesentlichen gleich sind (s.a. Figur 2). Der ATR-Körper 4 kann einstückig oder aus mehreren Teilen, welche mit einem optisch transparenten Verbindungsmittel verbunden sind, gefertigt sein. Wird ein Saphirkristall als ATR-Körper verwendet, so kann dieser mittels eines geeigneten Lots, zum Beispiel Gold- oder Platinlot, in ein Gehäuse 7 eingelötet sein. ATR-Körper aus anderen Materialien können auch mittels geeigneter Dichtmittel im Gehäuse 7 angeordnet werden, so dass eine mediumsdichte und vorzugsweise gasdichte Verbindung zwischen dem ATR-Körper 4 und dem Gehäuse 7 ausgebildet wird. Eine Oberfläche, die Messoberfläche 5, sowie die umlaufende Manteloberfläche 6 des ATR-Körpers 4 können direkt mit dem Messmedium 2 in Kontakt gebracht werden.

Das Gehäuse 7 weist an der dem Messmedium 2 zugewandten Seite einen Prozessflansch auf, mit dem der Sensor 2 an einer Prozessanlage oder einem anderen Behälter, wie hier durch die Wand 1 angedeutet, befestigt wird.

Der ATR-Körper 4 weist auf seiner vom Messmedium abgewandten Seite eine Aussparung 8 auf, welche zumindest teilweise als Kalibrierkammer 9 ausgestaltet ist.

Die Aussparung 8 hat einen im Wesentlichen runden Durchmesser und wird durch eine dem Messmedium 2 zugewandte plane Kalibrieroberfläche 10 begrenzt, welche parallel zur Messoberfläche 5 angeordnet ist. Die Kalibrierkammer 9 ist zum Inneren des Sensors 3 hin vorzugsweise gasdicht abgeschlossen und weist zwei Leitungen 14, 15 zum Einleiten und/oder Ableiten eines fluiden Kalibrierstandards auf. Die Leitungen 14, 15 sind beispielsweise mit einem Reservoir und/oder mit einer Vakuumpumpe verbunden, welche hier nicht gezeigt sind, so dass der Kalibrierstandard in die Kalibrierkammer 9 eingeleitet oder aus ihr entfernt werden kann.

Für eine Kalibrierung wird der fluide Kalibrierstandard in unterschiedlichen Konzentration, bei gasförmigen Standards mit unterschiedlichen Partialdrücken, in die Kalibrierkammer eingeleitet bzw. durch diese hindurchgeleitet. Für jede Konzentration wird ein separater Absorptionswert erfasst, welcher für eine interne Kalibrierung oder zur Überprüfung einer Grundkalibrierung herangezogen werden kann. Der Kalibrierstandard weist in der Regel dieselbe Substanz oder deren Hauptbestandteil auf, wie jene die auch vermessen wird. Für die Beschreibung des ATR-Körpers 4 sei hier auch auf Figur 2 verwiesen.

Weiterhin weist der Sensor 3 im Inneren einen Halter 11 auf, an dem eine Lichtquelle 12, sowie ein Detektor 13 befestigt sind. Die von der Lichtquelle 12 ausgesendete Strahlung 17 wird über geeignete optische Elemente in den ATR-Körper eingestrahlt und zunächst an der Mantelfläche 6 reflektiert. Weitere Reflektionen erfolgen abwechselnd an der Messoberfläche 5 und der Kalibrieroberfläche 10 bis die Strahlung wieder aus dem ATR-Körper 4 heraus auf einen Detektor 13 gelenkt wird. Es handelt sich bei jeder Reflektion um eine abgeschwächte Totalreflektion. Bei jeder Reflektion an einer Oberfläche dringt die Strahlung 17 in die Grenzfläche zwischen ATR-Körper 4 und dem Messmedium 2 bzw. dem Kalibrierstandard in der Kalibrierkammer 9 ein und wird von diesen teilweise absorbiert. Die vom Detektor 13 detektierte Absorption setzt sich somit aus der Absorption des Messmediums 2 und der Absorption des Kalibrierstandards zusammen, sofern ein Kalibrierstandard in der Kalibrierkammer 9 angeordnet ist. Sowohl die Lichtquelle 12, als auch der Detektor 13 sind über geeignete Mittel mit einer Steuer- und/oder Regeleinheit 16 verbunden, welche wie hier gezeigt im Sensor 3 und/oder extern angeordnet sein kann.

Figur 2 zeigt schematisch den ATR-Körper 4 mit der Kalibrierkammer 5 sowie einen möglichen Strahlengang 17 durch den ATR-Körper 4 als Teilvergrösserung aus Figur 1 im Schnitt. Der ATR-Körper 4 ist so in ein Sensorgehäuse 7 eingesetzt, dass eine vorzugsweise gasdichte Verbindung zwischen den beiden Bauteilen ausgebildet wird. Dieses geschieht zum Beispiel durch Einlöten eines aus Saphir bestehenden ATR-Körpers 4 oder durch Verwendung geeigneter Dichtmittel.

Der ATR-Körper 4 hat im Wesentlichen die Form eines Kegelstumpfes, welcher die Aussparung eines Hohlzylinders abdeckt. Eine Messoberfläche 5 des ATR-Körpers 4 wird von einer schräg abfallenden Mantelfläche 6 umgeben an die sich ein Bereich mit zur Messoberfläche 5 senkrecht angeordneter Aussenfläche 18 anschliesst. Die Aussenfläche 18 steht über ein Dichtmittel, wie beispielsweise ein Metalllot oder einen O-Ring, mit dem Sensorgehäuse 7 in Kontakt. Im Inneren weist der ATR-Körper 4 eine Aussparung 8 auf, welche gegen das Innere des Sensors hin geöffnet ist. Gegen das Messmedium 2 hin, wird die Aussparung 8 durch eine parallel zur Messoberfläche 5 angeordnete Kalibrieroberfläche 10 begrenzt.

Die Aussparung 8 wird über geeignete Mittel auf der dem Messmedium abgewandten Seite gasdicht abgeschlossen, so dass eine Kalibrierkammer 9 entsteht. Die Kalibrierkammer 9 weist hier zwei Leitungen 14, 15 zur Zuleitung oder Ableitung von fluiden, insbesondere gasförmigen, Kalibrierstandards auf, wie es mit den Pfeilen angedeutet ist. Die Kalibrierkammer 9 kann sich wie hier gezeigt über einen Teil der Aussparung 8 erstrecken oder auch über die vollständige Aussparung 8.

Weiterhin ist in Figur 2 der Strahlengang 17 dargestellt. Die Strahlung 17 wird von der Lichtquelle 12 über eine geeignete Optik (hier nicht gezeigt) in den ATR-Körper 4 eingekoppelt. Die Lichtquelle '12 kann schmalbandig oder als Breitbandlichtquelle ausgestaltet sein. Schmalbandige Lichtquellen sind beispielsweise Laser, Laserdioden oder auch Breitbandlichtquellen, aus denen mittels vorgeschalteter Filter ein bestimmter schmaler Spektralbereich ausgewählt wird. Zu den in der ATR-MIR-Spektroskopie (MIR; mittleres Infrarot) genutzten Breitbandlichtquelle gehören zum Beispiel die sogenannten Schwarzkörper-Strahler.

Die Strahlung 17 tritt in den ATR-Kristall 4 ein und trifft zunächst auf die Mantelfläche 6, wird dort abgeschwächt und total reflektiert, so dass sie anschliessend auf die Messoberfläche 5 trifft. Nach mehrfacher Totalreflektion, welche wechselseitig an der Messoberfläche 5 und an der Kalibrieroberfläche 10 stattfindet, wird die Strahlung 17 nach einer abschliessenden Reflektion an der Mantelfläche 6 wieder aus dem ATR-Körper 4 ausgekoppelt und zum Detektor 13 gelenkt.

Der Detektor 13 ist auf die verwendete Strahlung abgestimmt. Je nach Anwendungsgebiet kann daher ein Detektor eingesetzt werden, welcher den kompletten MIR Bereich abdeckt oder ein Detektor, welcher selektiv mindestens eine Wellenlänge detektieren kann. Für die Detektion von gelöstem Kohlendioxid können beispielsweise Pyrodetektoren, PbSe-Detektoren oder sogenannte Thermopiles eingesetzt werden.

Für eine Messung wird der fluide Kalibrierstandard aus der Kalibrierkammer 9 entfernt und in der Kalibrierkammer 9 entweder ein Vakuum erzeugt oder diese mit einem Gas oder Gasgemisch befüllt, welches für die verwendete Strahlung transparent ist oder diese nur schwach absorbiert.

Zur Kalibrierung oder zur Überprüfung einer aktuellen Kalibrierung oder einer Grundkalibrierung wird nacheinander der Kalibrierstandard in unterschiedlichen Konzentrationen in die Kalibrierkammer 9 eingeleitet. Zur Überprüfung wird der Kalibrierstandard in mindestens einer Konzentration vermessen. Für eine In-Line-Kalibrierung werden Messungen bei mindestens zwei verschiedenen Konzentrationen des Kalibrierstandards durchgeführt, wobei jeweils eine Messung des Messmediums ohne Kalibrierstandard unter gleichen Bedingungen als Nullpunkt oder Basiswert verwendet wird.

Während der Durchführung des Verfahrens verbleibt der Sensor im Messmedium 2 und damit in der Prozessanlage oder im Behälter.

Die detektierte Absorptionsbande oder -banden bzw. das detektierte Absorptionsspektrum stellt eine Überlagerung der Absorption des Messmediums und des Kalibrierstandards dar, wenn dieser in der Kalibrierkammer vorliegt. Durch Veränderung der Konzentration oder des Partialdrucks des fluiden Kalibrierstandards in der Kalibrierkammer kann durch Messungen bei mindestens zwei Konzentration die zuvor beschriebene In-Line-Kalibrierung durchgeführt werden oder eine Grundkalibrierung überprüft werden, ohne dass der Sensor aus dem Prozess entfernt werden muss.

### Bezugszeichenliste

- 1: Wand
- 2: Messmedium
- 3: ATR-Sensor
- 4: ATR-Körper
- 5: Messoberfläche
- 6: Manteloberfläche
- 7: Sensorgehäuse
- 8: Aussparung
- 9: Kalibrierkammer
- 10: Kalibrieroberfläche
- 11: Halter
- 12: Lichtquelle
- 13: Detektor
- 14: Leitung
- 15: Leitung
- 16: Steuer- und/oder Regeleinheit
- 17: Strahlengang / Strahlung

## Patentansprüche

1. Verfahren zur Kalibrierungs-Überprüfung und/oder In-Line-Kalibrierung eines ATR-Sensors (3) für eine in einem Messmedium (2) gelöste Substanz, wobei der ATR-Sensor (3) einen ATR-Körper (4), mindestens eine Lichtquelle (12) und mindestens einen Detektor (13) aufweist, **dadurch gekennzeichnet, dass** das Verfahren die folgenden Schritte umfasst:
a. in Kontakt bringen einer Messoberfläche (5) des ATR-Körpers (4) mit dem Messmedium (2);
b. erfassen mindestens eines ersten Absorptionswerts bei mindestens einer Wellenlänge nach abgeschwächter Totalreflektion einer von der Lichtquelle (12) in den ATR-Körper (4) eingestrahlten Strahlung mittels des Detektors (13);
c. in Kontakt bringen einer zur Messoberfläche (5) gegenüberliegend parallel angeordneten Kalibrieroberfläche (10) des ATR-Körpers (4) mit einem ersten fluiden Kalibrierstandard, welcher in einer ersten Konzentration vorliegt;
d. erfassen mindestens eines zweiten Absorptionswerts, wobei der zweite Absorptionswert sowohl die Absorption des Messmediums (2) als auch die des ersten Kalibrierstandards umfasst;
e. ermitteln einer Kalibrier-Prüffunktion mittels des ersten und zweiten Absorptionswerts und der Konzentration des ersten Kalibrierstandards und Vergleich der Kalibrier-Prüffunktion mit der Grundkalibrierung und/oder
f. durchführen einer In-Line Kalibrierung durch Wiederholen der Schritte (c) und (d) mit mindestens einem zweiten Kalibrierstandard mit einer zweiten Konzentration und erfassen eines dritten Absorptionswerts und
g. ermitteln einer aktuellen Kalibrierfunktion mittels des ersten, zweiten und dritten Absorptionswerts und der ersten und zweiten Konzentration.

2. Verfahren nach Anspruch 1, **dadurch gekennzeichnet, dass** der Kalibrierstandard ein fluides Medium ist, welches in eine an einer Seite von der Kalibrieroberfläche (10) begrenzten Kalibrierkammer (9) eingebracht oder entfernt wird.

3. Verfahren nach einem der Ansprüche 1 oder 2, **dadurch gekennzeichnet, dass** die Absorption des Kalibrierstandards und des Messmediums bei mindestens einer Messwellenlänge und mindestens einer Kallbrierwellenlänge erfasst werden, so dass mindestens zwei Kallbrier-Prüffunktionen und/oder mindestens zwei aktuelle Kalibrierfunktionen in Abhängigkeit der beiden Wellenlängen ermittelt werden können.

4. Verfahren nach einem der Ansprüche 1 bis 3, **dadurch gekennzeichnet, dass** aus dem ersten Absorptionswert mittels der Grundkalibrierung oder der aktuellen Kalibrierung der Gehalt der Substanz im Messmedium ermittelt wird.

5. Verfahren nach einem der Ansprüche 1 bis 4, **dadurch gekennzeichnet, dass** eine von der Lichtquelle (12) ausgesandte Strahlung abwechselnd an der Messoberfläche (5) und der zur Messoberfläche (5) parallelen Kalibrieroberfläche (10) reflektiert wird.

6. ATR-Sensor (3) zur Bestimmung einer in einem Messmedium (2) gelösten Substanz mit einem Gehäuse (7), mit einem ATR-Körper (4), welcher in das Gehäuse (7) eingesetzt ist, mit einer Lichtquelle (12) und einem Detektor (13), die beide im Gehäuse (7) angeordnet sind, und mit einer Kalibrierkammer (9) wobei der ATR-Körper (4) mindestens eine Messoberfläche (5), die mit dem Messmedium (2) in direktem Kontakt steht, und eine zur Messoberfläche (5) gegenüberliegend parallel angeordnete Kalibrieroberfläche (10) aufweist, die die Kalibrierkammer (9) auf mindestens einer Selte begrenzt und welche mit einem Kalibrierstandard in Kontakt bringbar ist, wobei mittels des ATR-Sensors ein Absorptionswert ermittelbar ist, welcher sowohl die Absorption des Messmediums als auch die des Kalibrierstandards umfasst, und wobei mittels des Absorptionswerts eine In-Line-Kalibrierung des ATR-sensors durch führbar oder eine Grundkalibrierung des ATR-sensors überprüfßar ist.

7. ATR-Sensor nach Anspruch 6, **dadurch gekennzeichnet, dass** die Messoberfläche (5) und die Kalibrieroberfläche (10) so zueinander angeordnet sind, dass eine von der Lichtquelle (12) ausgesandte Strahlung abwechselnd an diesen beiden Oberflächen (5, 10) reflektiert wird.

8. ATR-Sensor nach einem der Ansprüche 6 oder 7, **dadurch gekennzeichnet, dass** der ATR-Körper (4) an seiner mediumsabgewandeten Seite mindestens eine. Aussparung (8) aufweist.

9. ATR-Sensor nach Anspruch 8, **dadurch gekennzeichnet, dass** die Aussparung (8) auf ihrer dem Messmedium zugewandten Seite durch die Kalibrieroberfläche (10) begrenzt wird und durch geeignete Mittel unter Ausbildung der Kalibrierkammer (9) abgeschlossen wird.

10. ATR-Sensor nach einem der Ansprüche 6 bis 9, **dadurch gekennzeichnet, dass** die Kalibrierkammer (9) mindestens einen Anschluss zum Einleiten und/oder
Entfernen eines fluiden Kalibrierstandards aufweist.

11. ATR-Sensor nach einem der Ansprüche 6 bis 10, **dadurch gekennzeichnet, dass** der ATR-Körper (4) einstückig oder aus mittels optisch transparenten Material fest verbunden Teilkörpern ausgebildet ist.

12. Computerprogramm, welches in einer Auswerteeinheit eines ATR-Sensors nach einem der Ansprüche 6 bis 11 vorhanden ist und zur Durchführung des Verfahrens nach einem der Ansprüche 1 bis 5 dient, insbesondere zur Ermittlung eines Messergebnisses mittels einer Grundkalibrierung oder einer aktuellen Kalibrierung und/oder zur Überprüfung einer Kalibrierung.

## Claims

1. A method for the calibration check and/or in-line calibration of an ATR sensor (3) for a substance dissolved in a measurement medium (2), wherein the ATR sensor (3) comprises an ATR body (4), at least one light source (12), and at least one detector (13), **characterised in that** the method comprises the following steps:
a. bringing of a measurement surface (5) of the ATR body (4) into contact with the measurement medium (2);
b. recording by means of the detector (13) of at least one first absorption value for at least one wavelength after attenuated total reflection of radiation irradiated from the light source (12) into the ATR body (4);
c. bringing of a calibration surface (10) of the ATR body (4), arranged parallel and opposed to the measurement surface (5), into contact with a first fluid calibration standard, which is present in a first concentration;
d. recording of at least one second absorption value, wherein the second absorption value comprises both the absorption of the measurement medium (2) and also that of the first calibration standard;
e. determination of a calibration check function by means of the first and second absorption values and the concentration of the first calibration standard, and a comparison of the calibration check function with the basic calibration,
and/or
f. execution of an in-line calibration by a repetition of the steps (c) and (d) with at least one second calibration standard with a second concentration, and recording of a third absorption value and
g. determination of a current calibration function by means of the first, second and third absorption values and the first and second concentrations.

2. The method according to Claim 1, **characterised in that** the calibration standard is a fluid medium, which is introduced into or removed from a calibration chamber (9) delimited on one side by the calibration surface (10).

3. The method according to one of the Claims 1 or 2, **characterised in that** the absorption of the calibration standard and of the measurement medium are recorded for at least one measurement wavelength and at least one calibration wavelength, so that at least two calibration check functions and/or at least two current calibration functions can be determined as a function of the two wavelengths.

4. The method according to one of the Claims 1 to 3, **characterised in that** the content of the substance in the measurement medium is determined from the first absorption value by means of the basic calibration or the current calibration.

5. The method according to one of the Claims 1 to 4, **characterised in that** radiation emitted from the light source (12) is alternately reflected at the measurement surface (5) and the calibration surface (10) parallel to the measurement surface (5).

6. An ATR sensor (3) for the determination of a substance dissolved in a measurement medium (2) with a housing (7), with an ATR body (4), which is inserted into the housing (7), with a light source (12) and a detector (13), both of which are arranged in the housing (7), and with a calibration chamber (9), wherein the ATR body (4) comprises at least one measurement surface (5), which is in direct contact with the measurement medium (2), and a calibration surface (10) arranged parallel and opposed to the measurement surface (5), which bounds the calibration chamber (9) on at least one side, and which can be brought into contact with a calibration standard, wherein by means of the ATR sensor an absorption value can be determined, which comprises both the absorption of the measurement medium and also that of the calibration standard, and wherein by means of the absorption value an in-line calibration of the ATR sensor can be executed or a basic calibration of the ATR sensor can be checked.

7. The ATR sensor according to Claim 6, **characterised in that** the measurement surface (5) and the calibration surface (10) are arranged relative to one another such that radiation emitted from the light source (12) is alternately reflected at these two surfaces (5, 10).

8. The ATR sensor in accordance with one of the Claims 6 or 7, **characterised in that** the ATR body (4) comprises at least one cavity (8) on its side facing away from the medium.

9. The ATR sensor in accordance with Claim 8, **characterised in that** on its side facing towards the measurement medium the cavity (8) is delimited by the calibration surface (10), and by suitable means is closed off with the formation of the calibration chamber (9).

10. The ATR sensor in accordance with one of the Claims 6 to 9, **characterised in that** the calibration chamber (9) comprises at least one port for the introduction and/or removal of a fluid calibration standard.

11. The ATR sensor in accordance with one of the Claims 6 to 10, **characterised in that** the ATR body (4) is of integral design, or is designed from body parts solidly connected by means of an optically transparent material.

12. A computer program, which is present in an evaluation unit of an ATR sensor in accordance with one of the Claims 6 to 11, and enables the execution of the method in accordance with one of the Claims 1 to 5, in particular to determine a measurement result by means of a basic calibration, or a current calibration, and/or to check a calibration.

## Revendications

1. Procédé pour le contrôle de calibrage et/ou le calibrage en ligne d'un capteur ATR (3) pour une substance dissoute dans un milieu de mesure (2), le capteur ATR (3) comprenant un corps ATR (4), au moins une source de lumière (12) et au moins un détecteur (13), **caractérisé en ce que** le procédé comprend les étapes suivantes :
a. mise en contact d'une surface de mesure (5) du corps ATR (4) avec le milieu de mesure (2) ;
b. enregistrement d'au moins une première valeur d'absorption avec au moins une longueur d'onde après réflexion totale affaiblie d'un rayonnement entré par la source de lumière (12) dans le corps ATR (4) au moyen du détecteur (13) ;
c. mise en contact d'une surface de calibrage (10), disposée en parallèle en face de la surface de mesure (5), du corps ATR (4) avec un premier standard de calibrage fluide, lequel est présent dans une première concentration ;
d. enregistrement d'au moins une seconde valeur d'absorption, la seconde valeur d'absorption comprenant aussi bien l'absorption du milieu de mesure (2) que celle du premier standard de calibrage ;
e. détermination d'une fonction de test de calibrage au moyen de la première et de la seconde valeurs d'absorption et de la concentration du premier standard de calibrage et comparaison de la fonction de test de calibrage avec le calibrage de base
et/ou
f. mise en oeuvre d'un calibrage en ligne par répétition des étapes (c) et (d) avec au moins un second standard de calibrage avec une seconde concentration et enregistrement d'une troisième valeur d'absorption et
g. détermination d'une fonction de calibrage actuelle au moyen de la première, de la seconde et de la troisième valeurs d'absorption ainsi que de la première et de la seconde concentrations.

2. Procédé selon la revendication 1, **caractérisé en ce que** le standard de calibrage est un milieu fluide, qui est introduit dans une chambre de calibrage (9) délimitée sur un côté par la surface de calibrage (10) ou est enlevé.

3. Procédé selon l'une quelconque des revendications 1 ou 2, **caractérisé en ce que** l'absorption du standard de calibrage et du milieu de mesure est enregistrée avec au moins une longueur d'onde de mesure et au moins une longueur d'onde de calibrage, de sorte qu'au moins deux fonctions de test de calibrage et/ou au moins deux fonctions de calibrage actuelles peuvent être déterminées en fonction des deux longueurs d'onde.

4. Procédé selon l'une quelconque des revendications 1 à 3, **caractérisé en ce que** la teneur de la substance dans le milieu de mesure est déterminée à partir de la première valeur d'absorption au moyen du calibrage de base ou du calibrage actuel.

5. Procédé selon l'une quelconque des revendications 1 à 4, **caractérisé en ce qu'**un rayonnement émis par la source de lumière (12) est réfléchi alternativement sur la surface de mesure (5) et la surface de calibrage (10) parallèle à la surface de mesure (5).

6. Capteur ATR (3) pour déterminer une substance dissoute dans un milieu de mesure (2) comprenant un boîtier (7), un corps ATR (4), qui est inséré dans le boîtier (7), une source de lumière (12) et un détecteur (13), qui sont disposés tous deux dans le boîtier (7), et une chambre de calibrage (9), le corps ATR (4) présentant au moins une surface de mesure (5), qui est en contact direct avec le milieu de mesure (2), et une surface de calibrage (10) disposée parallèlement en face de la surface de mesure (5), laquelle délimite la chambre de calibrage (9) sur au moins un côté et qui peut être amenée en contact avec un standard de calibrage, une valeur d'absorption pouvant être déterminée au moyen du capteur ATR, laquelle valeur comprend aussi bien l'absorption du milieu de mesure que celle du standard de calibrage, et un calibrage en ligne du capteur ATR pouvant être mis en oeuvre au moyen de la valeur d'absorption ou un calibrage de base du capteur ATR pouvant être contrôlé.

7. Capteur ATR selon la revendication 6, **caractérisé en ce que** la surface de mesure (5) et la surface de calibrage (10) sont disposées l'une par rapport à l'autre de telle sorte qu'un rayonnement émis par la source de lumière (12) est réfléchi alternativement sur ces deux surfaces (5, 10).

8. Capteur ATR selon l'une quelconque des revendications 6 ou 7, **caractérisé en ce que** le corps ATR (4) comprenant au moins un évidement (8) sur son côté éloigné du milieu.

9. Capteur ATR selon la revendication 8, **caractérisé en ce que** l'évidement (8) est délimité par la surface de calibrage (10) sur son côté tourné vers le milieu de mesure et est terminé par des moyens appropriés en formant la chambre de calibrage (9).

10. Capteur ATR selon l'une quelconque des revendications 6 à 9, **caractérisé en ce que** la chambre de calibrage (9) comprenant au moins un branchement pour l'introduction et/ou l'enlèvement d'un standard de calibrage fluide.

11. Capteur ATR selon l'une quelconque des revendications 6 à 10, **caractérisé en ce que** le corps ATR (4) est conçu d'une seule pièce ou à base de corps partiels reliés fixement au moyen de matériau transparent visuellement.

12. Programme informatique, qui est présent dans une unité d'analyse d'un capteur ATR selon l'une quelconque des revendications 6 à 11 et sert à la mise en oeuvre du procédé selon l'une quelconque des revendications 1 à 5, en particulier pour déterminer un résultat de mesure au moyen d'un calibrage de base ou d'un calibrage actuel et/ou pour le contrôle d'un calibrage.
